(19) Europäisches Patentamt
European Patent Office
Office européen des brevets

(11) **EP 4 600 865 A1**

(12) **EUROPEAN PATENT APPLICATION**

(43) Date of publication:
**13.08.2025 Bulletin 2025/33**

(21) Application number: **24156780.9**

(22) Date of filing: **09.02.2024**

(51) International Patent Classification (IPC):
**G06N 3/00** *(2023.01)* **H04L 1/00** *(2006.01)*
**H04L 5/00** *(2006.01)*

(52) Cooperative Patent Classification (CPC):
**H04L 1/0035; G06N 3/00; H04L 1/0039;**
**H04L 5/001; H04L 5/0053**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Nokia Technologies Oy**
**02610 Espoo (FI)**

(72) Inventors:
• **SHRIVASTAVA, Anupam**
**Dallas, 75019 (US)**
• **LIU, Bryan**
**91400 Orsay (FR)**

(74) Representative: **Page White Farrer**
**Bedford House**
**21a John Street**
**London WC1N 2BF (GB)**

(54) **METHOD, APPARATUS AND COMPUTER PROGRAM**

(57) There is provided an apparatus, method and computer program for causing an apparatus of a terminal to perform: receiving information for configuring a first machine learning model from a network node, the first machine learning model being configured to decode received downlink control information, DCI, message(s) to obtain decoded primary cell DCI message(s); receiving information for configuring a second machine learning model from the network node, the second machine learning model being configured to decode received DCI message(s) to obtain decoded secondary cell DCI message(s); receiving a common DCI message; using the first machine learning model to obtain a decoded primary cell DCI message by inputting the common DCI message into the first machine learning model; and using the second machine learning model to obtain a decoded secondary cell DCI message by inputting the common DCI message into the second machine learning model.

Fig. 8

EP 4 600 865 A1

**Description**

FIELD

The present application relates a potential use of a common downlink control information (DCI) message, wherein the common DCI message is common for both a primary cell and a secondary cell.

BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

SUMMARY

According to a first aspect, there is provided an apparatus for a terminal, the apparatus comprising means for performing: receiving information for configuring a first machine learning model from a network node, the first machine learning model being configured to decode received downlink control information, DCI, message(s) to obtain decoded primary cell DCI message(s); receiving information for configuring a second machine learning model from the network node, the second machine learning model being configured to decode received DCI message(s) to obtain decoded secondary cell DCI message(s); receiving a common DCI message; using the first machine learning model to obtain a decoded primary cell DCI message by inputting the common DCI message into the first machine learning model; and using the second machine learning model to obtain a decoded secondary cell DCI message by inputting the common DCI message into the second machine learning model.

According to a second aspect, there is provided an apparatus for a terminal, the apparatus comprising: at least one processor; and at least one memory comprising code that, when executed by the at least one processor, causes the apparatus to perform: receiving information for configuring a first machine learning model from a network node, the first machine learning model being configured to decode received downlink control information, DCI, message(s) to obtain decoded primary cell DCI message(s); receiving information for configuring a second machine learning model from the network node, the second machine learning model being configured to decode received DCI message(s) to obtain decoded secondary cell DCI message(s); receiving a common DCI message; using the first machine learning model to obtain a decoded primary cell DCI message by inputting the common DCI message into the first machine learning model; and using the second machine learning model to obtain a decoded secondary cell DCI message by inputting the common DCI message into the second machine learning model.

According to a third aspect, there is provided a method for an apparatus for a terminal, the method comprising: receiving information for configuring a first machine learning model from a network node, the first machine learning model being configured to decode received downlink control information, DCI, message(s) to obtain decoded primary cell DCI message(s); receiving information for configuring a second machine learning model from the network node, the second machine learning model being configured to decode received DCI message(s) to obtain decoded secondary cell DCI message(s); receiving a common DCI message; using the first machine learning model to obtain a decoded primary cell DCI message by inputting the common DCI message into the first machine learning model; and using the second machine learning model to obtain a decoded secondary cell DCI message by inputting the common DCI message into the second machine learning model.

According to a fourth aspect, there is provided an apparatus for a terminal, the apparatus comprising: receiving circuitry for receiving information for configuring a first machine learning model from a network node, the first machine learning model being configured to decode received downlink control information, DCI, message(s) to obtain decoded primary cell DCI message(s); receiving circuitry for receiving information for configuring a second machine learning model from the network node, the second machine learning model being configured to decode received DCI message(s) to obtain decoded secondary cell DCI message(s); receiving circuitry for receiving a common DCI message; using circuitry for using the first machine learning model to obtain a decoded primary cell DCI message by inputting the common DCI message into the first machine learning model; and using circuitry for using the second machine learning model to obtain a decoded secondary cell DCI message by inputting the common DCI message into the second machine learning model.

The following may apply in respect of any (e.g., all) of the above-mentioned aspects.

The using the first machine learning model may comprise performing: using at least one predetermined first set of information with the common DCI message to decode the common DCI message to form the decoded primary cell DCI message, wherein the at least one predetermined first set of information comprises at least one of: a previously transmitted DCI message of the primary cell, a channel status at a current transmission time interval of the primary cell, or a buffer status at a current transmission time interval of the primary cell.

The apparatus may be caused to perform: receiving an indication identifying the at least one predetermined first set of information.

The using the second machine learning model may comprise performing: using at least one predetermined second set of information with the common DCI message to decode the common DCI message to form the decoded secondary cell DCI message, wherein the at least one predetermined second set of information comprises at least one of: a previously transmitted DCI message of the secondary cell, a channel status at a current transmission time interval of the secondary cell, or a buffer status at a current transmission time interval of the secondary cell.

The apparatus may be caused to perform: receiving an indication identifying the at least one predetermined secondary set of information.

The common DCI message may be received using a primary component carrier of the primary cell.

The apparatus may be caused to perform: determining that the decoded primary cell DCI message has passed a cyclic redundancy check; and/or determining that the decoded secondary cell DCI message has passed a cyclic redundancy check.

At least one of the first machine learning model or the second machine learning model may be an injective function.

At least one of the first machine learning model or the second machine learning model may be a neural network decoder.

According to a fifth aspect, there is provided an apparatus for a network node, the apparatus comprising means for performing: transmitting information for configuring a first machine learning model to a terminal, the first machine learning model being configured to decode received downlink control information, DCI, message(s) to obtain decoded primary cell DCI message(s); transmitting information for configuring a second machine learning model to the terminal, the second machine learning model being configured to decode received DCI message(s) to obtain decoded secondary cell DCI message(s); determining whether to transmit a common DCI message that is common for both a secondary cell and a primary cell based on the first and second machine learning models; and transmitting a DCI message based on the determining.

According to a sixth aspect, there is provided an apparatus for a network node, the apparatus comprising: at least one processor; and at least one memory comprising code that, when executed by the at least one processor, causes the processor to perform: transmitting information for configuring a first machine learning model to a terminal, the first machine learning model being configured to decode received downlink control information, DCI, message(s) to obtain decoded primary cell DCI message(s); transmitting information for configuring a second machine learning model to the terminal, the second machine learning model being configured to decode received DCI message(s) to obtain decoded secondary cell DCI message(s); determining whether to transmit a common DCI message that is common for both a secondary cell and a primary cell based on the first and second machine learning models; and transmitting a DCI message based on the determining.

According to a seventh aspect, there is provided a method for an apparatus for a network node, the method comprising: transmitting information for configuring a first machine learning model to a terminal, the first machine learning model being configured to decode received downlink control information, DCI, message(s) to obtain decoded primary cell DCI message(s); transmitting information for configuring a second machine learning model to the terminal, the second machine learning model being configured to decode received DCI message(s) to obtain decoded secondary cell DCI message(s); determining whether to transmit a common DCI message that is common for both a secondary cell and a primary cell based on the first and second machine learning models; and transmitting a DCI message based on the determining.

According to an eighth aspect, there is provided an apparatus for a network node, the apparatus comprising: transmitting circuitry for transmitting information for configuring a first machine learning model to a terminal, the first machine learning model being configured to decode received downlink control information, DCI, message(s) to obtain decoded primary cell DCI message(s); transmitting circuitry for transmitting information for configuring a second machine learning model to the terminal, the second machine learning model being configured to decode received DCI message(s) to obtain decoded secondary cell DCI message(s); determining circuitry for determining whether to transmit a common

**EP 4 600 865 A1**

DCI message that is common for both a secondary cell and a primary cell based on the first and second machine learning models; and transmitting circuitry for transmitting a DCI message based on the determining.

The following may apply in respect of any (e.g., all) of the above mentioned fifth to eighth aspects.

The apparatus may be caused to perform: determining whether to transmit the common DCI message by performing: encoding a primary cell DCI message using a primary component carrier encoder to form the common DCI message; decoding the common DCI message using the first machine learning model to obtain a first decoded DCI message; and determining whether the first decoded DCI message and the primary cell DCI message are identical; and encoding the primary cell DCI message using the primary component carrier encoder to form the common DCI message; decoding the common DCI message using the second machine learning model to obtain a second decoded DCI message; and determining whether the second decoded DCI message is identical to a secondary cell DCI message; wherein the transmitted DCI message comprises the common DCI message that is common for primary and secondary cells when it is determined that the first decoded DCI message and the primary cell DCI message are identical, and that the second decoded DCI message and the secondary cell DCI message are identical.

The using the first machine learning model may comprise performing: using at least one predetermined first set of information with the common DCI message to decode the common DCI message to form the first decoded DCI message, wherein the at least one predetermined first set of information comprises at least one of: a previously transmitted DCI message of the primary cell, a channel status at a current transmission time interval of the primary cell, or a buffer status at a current transmission time interval of the primary cell.

The apparatus may be caused to perform receiving an indication identifying the at least one predetermined first set of information.

The using the second machine learning model may comprise performing: using at least one predetermined second set of information with the common DCI message to decode the common DCI message to form the second decoded DCI message, wherein the at least one predetermined second set of information comprises at least one of: a previously transmitted DCI message of the secondary cell, a channel status at a current transmission time interval of the secondary cell, or a buffer status at a current transmission time interval of the secondary cell.

The apparatus may be caused to perform receiving an indication identifying the at least one predetermined secondary set of information.

The common DCI message may be transmitted using a primary component carrier of the primary cell.

The transmitting the DCI message may comprise transmitting the common DCI message and another DCI message, wherein the common DCI message is transmitted as a primary cell DCI message and the another DCI message is transmitted as a secondary cell DCI message when it is determined that at least one of the first decoded DCI message and the primary cell DCI message are not identical, or that the second decoded DCI message and the secondary cell DCI message are not identical.

The apparatus may be caused to perform training the first and second machine learning models.

At least one of the first machine learning model or the second machine learning model may be an injective function.

At least one of the first machine learning model or the second machine learning model may be a neural network decoder.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

DESCRIPTION OF FIGURES

Embodiments will now be described, by way of example only, with reference to the accompanying Figures in which:

Figure 1 shows a representation of a network system according to some example embodiments;
Figure 2 shows a representation of a control apparatus according to some example embodiments;
Figure 3 shows a representation of an apparatus according to some example embodiments;
Figure 4 shows a representation of a use of component carriers;
Figures 5 to 7 illustrate example components of apparatus described herein and/or operations that may be performed by apparatus; and
Figures 8 to 9 illustrate example operations that may be performed by apparatus described herein.

DETAILED DESCRIPTION

The following describes operations that may be performed in relation to conveying downlink control information (DCI) in a multicarrier system.

In particular, the following discloses the use of a same, common, DCI message for obtaining DCI information for both a primary cell, and at least one a secondary cell.

In more detail, a terminal that receives the common DCI message inputs the common DCI message into a first machine learning model that is configured to use preconfigured primary cell-specific information (referred to below as primary "local features") and the common DCI message to output a primary cell-specific DCI message. That primary cell-specific DCI message may be used by the terminal for identifying resources for transmitting and/or receiving on the primary cell. Transmission and/or reception on the primary cell may be performed based on the identified resources.

Analogously, the terminal inputs the common DCI message into a second machine learning model that is configured to use preconfigured secondary cell-specific information (referred to below as secondary "local features") and the common DCI message to output a secondary cell-specific DCI message. That secondary cell-specific DCI message may be used by the terminal for identifying resources for transmitting and/or receiving on the cell. Transmission and/or reception on the secondary cell may be performed based on the identified resources.

The common DCI message may be transmitted using the primary cell. The common DCI message may be transmitted using the primary cell and not using the secondary cell.

The first and second machine learning models may be generated by a network node using respective data points from historic information of transmissions and/or receptions made on the primary and secondary cells. The first and second machine learning models may be configured using information provided to the terminal from a network. The information provided to the terminal may be provided, for example, over the primary component carrier.

The following describes methods and apparatus in more detail below, with reference to terminology currently used with respect to a 5G network. However, it is understood that the presently described techniques are not limited to a 5G network, and may be used, for example, in other communication networks, including 6G and beyond.

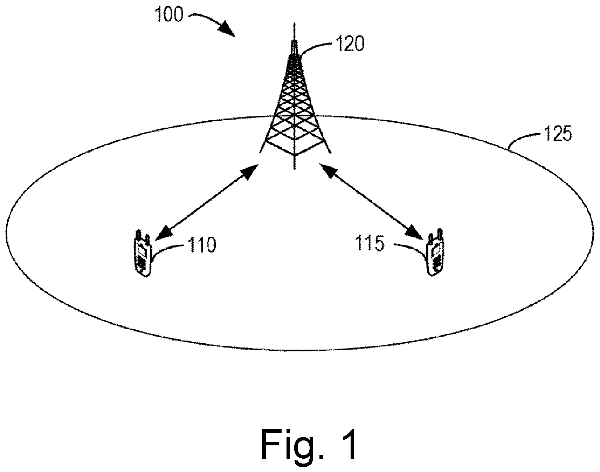

Figures 1 to 3 provide an overview of an example communication environment and apparatus in which the presently described techniques may be used.

Figure 1 illustrates an example communication environment in which example embodiments of the present disclosure can be implemented.

Figure 1 shows an example communication environment 100 in which example embodiments of the present disclosure can be implemented.

In the communication environment 100, a plurality of communication devices, comprising user devices 110 and 115 (also referred to herein as a "terminal" or "terminal device") and a network device 120 (also referred to herein as a "network access node"), can communicate with each other. The network device 120 may serve a coverage area, called a cell 125. The user device 110 may have access to a communication network via the cell 125. In some example embodiments, both the user device 110 and the network device 120 may be configured to implement a beamforming technique and communicate with each other via a plurality of beams.

The term "terminal device" refers to any end device that may be capable of wireless communication. By way of example rather than limitation, a terminal device may also be referred to as a communication device, user equipment (UE), a Subscriber Station (SS), a Portable Subscriber Station, a mobile device, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), a machine-type communications (MTC) device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user device", "user equipment" and "UE" may be used interchangeably.

As used herein, the term "network device" is used interchangeably with "network access node", and refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology.

In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

Stated differently, the station of the access system may be categorised into two different types: distributed units (DUs), and centralised units (CUs).

A DU provides access node support for lower layers of the protocol stack (such as, for example, the radio link control (RLC), medium access control (MAC), and/or physical layer protocol layers). Each DU is able to support one or more cells, while each cell is able to support one or more beams.

A CU can support multiple DUs, and provides access node support for higher layers of the protocol stack within an access node (such as, for example, packet data convergence protocol (PDCP), service data adaptation protocol (SDAP), and/or radio resource control (RRC) protocol layers). The interface between a CU and a DU is labelled as an F1 interface. There is a single CU for each gNB, and CU's belonging to multiple gNB may be implemented using a shared hardware platform.

A RAN (Radio Access Network) node or network node or access node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3.

The gNB CU and gNB DU parts may e.g., be co-located or physically separated. The gNB DU may even be split further, e.g., into two parts, e.g., one including processing equipment and one including an antenna. A Central Unit (CU) may also be called a baseband unit (BBU), Radio Equipment Controller (REC), radio coordination controller (RCC), centralised-radio access network (C-RAN), virtualised-radio access network (V-RAN), open radio access network (O-RAN), or part thereof. A Distributed Unit (DU) may also be called remote radio head (RRH), remote radio unit (RRU), radio element (RE), radio unit (RU), or part thereof. Hereinafter, in various example embodiments of the present disclosure, the CU-CP (or more generically, the CU) may also be referred to as a (first) network node that supports at least one of central unit control plane functionality or a layer 3 protocol of a radio access network; and similarly, the DU may be referred to as a (second) network node that supports at least one of distributed unit functionality or the layer 2 protocol of the radio access network.

A gNB-DU supports one or multiple cells, and could thus serve as e.g., a serving cell for a user equipment (UE).

The following description provides illustrative examples with reference to multi-carrier (e.g., multi-cell) systems. Multi-carrier systems may comprise a master node (e.g., a transmitter of a primary cell) and at least one secondary node (e.g., a transmitter of a secondary cell).

In some example embodiments, a link from the network device 120 to the user device 110 or 115 is referred to as a downlink (DL), while a link from the user device 110 or 115 to the network device 120 is referred to as an uplink (UL). Links are also referred to herein as "channels". In DL, the network device 120 is a transmitter (Tx) device (or a transmitter), and the user device 110 or 115 is a receiver (Rx) device (or a receiver). In UL, the user device 110 or 115 is a Tx device (or a transmitter), and the network device 120 is a Rx device (or a receiver). A link between the user device 110 and another user device (not shown) is referred to as a sidelink (SL). In SL, one of the user devices is a Tx device (or a transmitter), and the other of the user devices is a Rx device (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

A radio access network node may be configured to provide areas of coverage known as cells. These cells may be labelled in a plurality of different ways, depending on the functionality they provide to that user device.

For example, PSCells are a type of cell currently defined in 5G New Radio, along with Primary Cells (PCells), Secondary Cells (SCells) and Special Cells (SpCells). A PCell may be used as part of an initial access between a UE and an access network, and is considered to be a main cell in a master cell group (MCG). A PSCell may be comprised as part of a secondary cell group (SCG). The SpCells and SCells may be in at least one of the MCG and the SCG.

The cells may be controlled by network nodes. There are a maximum of two different types of network nodes in 5G New Radio: Master nodes (which provide a control plane connection to a core network); and Secondary Nodes (which do not have control plane connections to the core network). It is understood that not all 5G system deployments may comprise a master node and a secondary node. For example, the Master and Secondary nodes may be present in a master node-dual connectivity deployment, but not in a standalone deployment. The Master and Secondary nodes may both provide user plane (e.g. data) connections to the core network. The Master node may control the PCell. In addition to the PCell, the Master node may control at least one PSCell, although this is not always the case. The Secondary node may control at least one PSCell.

In current 3GPP standards, one primary cell (PCell) can have up to three frequency division duplex (FDD) secondary cell (SCell) candidates, and a maximum of one frequency range 1 (FR1) time division duplex (TDD) secondary cell (SCell) candidate configured.

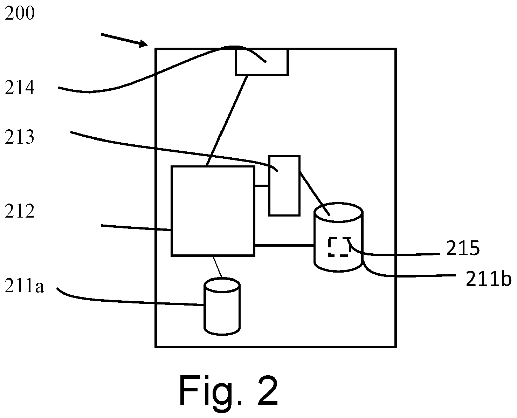

Figure 2 illustrates an example of a control apparatus 200 for causing a network device 120 (such as the network device described in Figure 1) to perform its operations. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the network device. In some embodiments, each function of the network device comprises a control apparatus 200. In some exemplary embodiments, the apparatus 200 may be implemented at the network device 120 or may be the network device 120.

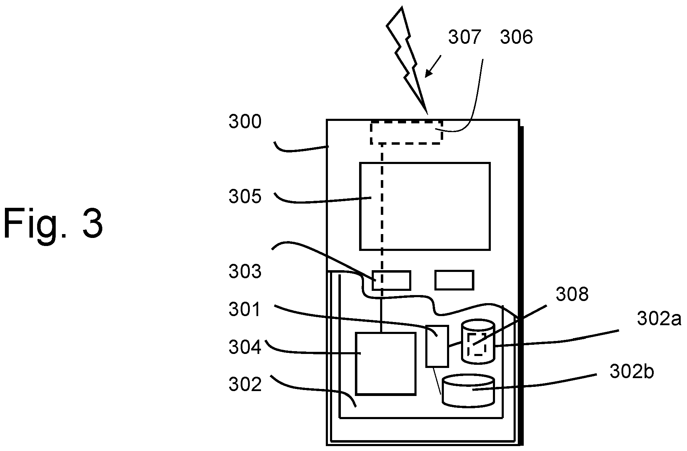

Figure 3 illustrates an example of a terminal 300, such as the user device 110, 115 illustrated on Figure 1. The terminal 300 may be provided by any device capable of sending and receiving radio signals, such as the user device described herein. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems (such as a network access system provided by the network device described above in relation to Figures 1 and 2) and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as key pad 305, touch sensitive screen or pad, combinations thereof or the like. Optionally one or more of a display, a speaker and a microphone may be provided depending on the type of the device.

In some exemplary embodiments, the terminal 300 may be an apparatus comprising at least one processor and at least one memory storing instructions that, when executed by the at least one processor, cause a user device 110, 115 to perform examples or embodiments described in this document.

Downlink Control Information (DCI) has been used in 3GPP communication networks to perform several major functionalities. These functionalities include:

- Carrying information for scheduling (e.g., to allocate physical resources) for Downlink Data (PDSCH);
- Carrying information for scheduling (e.g., to allocate physical resources) for Uplink Data (PUSCH); and
- Carrying information for adjust Uplink Power (PUSCH, PUCCH power) for power control.

Current 3GPP specifications define a plurality of different formats for the DCI, with each DCI format being associated with respective use cases. These are currently defined in 3GPP TS 38.212, and include, e.g., Format 0_0 relates to the scheduling PUSCH resources in a single cell, Format 1_0 relates to scheduling PDSCH in a single cell, Format 2_0 relates to notifying a group of UEs of the slot format, Format 1_2 relates to the transmission of transmission power control commands for uplink transmissions, and so on.

Given the importance of DCI in providing scheduling and transmission information to a plurality of different terminals, research efforts have been directed towards considering how the format or creation of DCI messages can be further improved for making DCI message transmission more efficient.

The following will focus on how DCI message transmission may be made more efficient in a Carrier Aggregation (CA) system. In particular, the following will focus on a design of the DCI message that may be used for reducing (e.g., minimising) transmission overhead and improving an access network's communication performance.

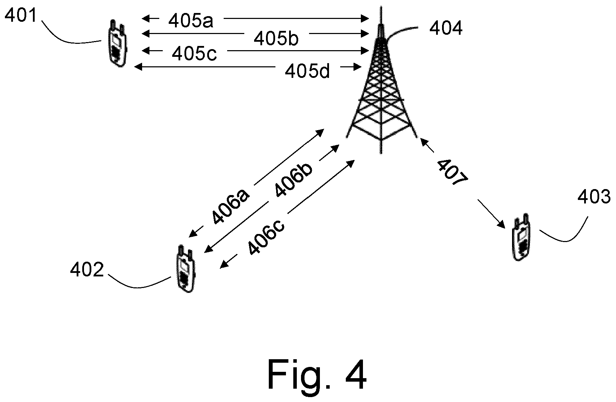

With CA, one user equipment (UE) can be assigned by multiple frequency blocks to increase the data rate. Stated differently, CA allows multiple frequency blocks to be scheduled for one UE to improve the data rate. This is illustrated with respect to Figure 4.

Figure 4 illustrates examples of how different terminal 401-403 can be configured for communications with an access network node 404.

In particular, Figure 4 illustrates that a first terminal 401 is configured for communications with the access network node 404 using 4 component carriers 405a-405d (e.g., using carrier aggregation). Of these component carriers, one of these component carriers 405a is the component carrier for the PCell, while the remaining three component carriers 405b-d are SCells for downlink non-guaranteed bit rate (non-GBF) traffic. The PCell component carrier 405a is for both downlink traffic (both GBR and non-GBR), and uplink traffic.

Figure 4 further illustrates a second terminal 402 that is configured for communications with the access network node 404 using 3 component carriers 406a-406c (e.g., using carrier aggregation). Of these component carriers, one of these component carriers 406a is the component carrier for the PCell, while the remaining two component carriers 4065b-c are SCells for downlink non-guaranteed bit rate (non-GBF) traffic. The PCell component carrier 406a is for both downlink traffic (both GBR and non-GBR), and uplink traffic.

Figure 4 further illustrates a third terminal 403 that is configured for communication with the access network node using a single carrier 407 (e.g., without using carrier aggregation). This single carrier 407 may is for both downlink traffic (both GBR and non-GBR), and uplink traffic.

In order to configure terminals such as the first and second terminals 401, 402 with resources (e.g., time-frequency resources, such as physical resource blocks) for transmission and/or reception, it has been proposed to use multi-carrier scheduling using DCI signalling.

Multi-carrier scheduling relates to scheduling resources for use on primary and second cells as part of a same allocation procedure. Additionally, a carrier aggregated system provides the possibility of using a single DCI to schedule multiple cells. Using a single DCI to schedule multiple cells may reduce the transmission overhead and inter-cell interference for the cell-edge UEs.

Stated differently, resources in a carrier aggregation system may be allocated (e.g., scheduled) using a multi-carrier scheduling technique, where a single (e.g., one) DCI message can be used to schedule multiple cells. Simultaneously scheduling both primary and secondary cells using a same DCI message is associated with an aim of reducing both the number of resources for scheduling and transmission overhead relative to sending individual DCI messages for each cell.

In some current 3GPP proposals, multi-carrier scheduling involves the defining various information as either "common" information for all carriers, or "separate" (e.g., independent) information for each carrier. The information so defined is then placed into different types of DCI fields in a DCI message, such that the different DCI field types are labelled as being either a "common" field (which comprises common information to all cell types of the CA system) or a "separate" field (which comprises separate, respective information for each cell types).

Stated differently, current scheduling proposals are designed based on field classification, where the fields are classified into common or separate information. The common information is shared and used for multiple cells, while the separate information used for a single cell. The type of information that is common information is predefined and agreed by 3GPP standardization.

For example, modulation and coding schemes, redundancy version, new data indicator, etc. may be designated in the DCI as separate fields per cell-type in order to provide proper scheduling for each carrier. As another example, DCI fields such as frequency domain assignment, carrier indicator, cyclic redundancy check scheme, etc. may be set as common fields.

Besides the benefit of reducing overhead, this DCI format design is simple, as where the fields are generated and transmitted follows preconfigured rules for the predefined types.

However, the present application has identified several drawbacks of pre-defining the common and separate information, including a lack of flexibility, marginal performance improvements on the reduction of overhead, and a reduction in backwards compatibility when changes on the format of DCI are utilised.

For example, the number of cells that can be scheduled together in such a scheme is constrained by the size that a single DCI message can have. For example, where the DCI message has a predefined maximum size, when it is predefined that there is provided n individual respective fields per cell-type in a DCI message, then the number of these n individual fields (and hence the number of cells that can be scheduled in a same DCI message) is limited by this maximum predetermined maximum DCI size.

Further, the DCI messages might be correlated in different ways in a carrier aggregation system, such that reclassifying the fields dynamically would be useful to help the whole system achieve a better performance (e.g., more efficient use of resources and/or optimised throughput). Such dynamic reclassification is not currently possible in current schemes.

For example, according to current proposals on multi-carrier (e.g., multi-cell) DCI allocation, three types of fields are defined, where the fields could be defined as separate, common or semi-statically configurable by a network operator as common or separate for each of the co-scheduled cells. This leads to the difficulty of determining the category of field (e.g., common field or separate field) for each field for optimising the cellular network's performance with the increment of number of cells, and how to convey this categorisation to receiving terminals.

The following aims to address at least one of the above-described problems.

In the following, instead of presetting a certain group of fields as a common space, machine learning algorithms are used to identify whether a common DCI message can be generated that can be decoded to obtain allocation information for each cell. In this common DCI message, there are no defined fields that are designated for individual UE. Instead, the information is grouped according to learned usage of that DCI information from historic information (e.g., which may be performed during a training phase) and encoded based on the identity of the cells being considered and local information for those cells. The common DCI message may subsequently be transmitted using the primary cell (e.g., primary component carrier).

Therefore, in general, machine learning methods are leveraged to map DCI-based information within a DCI message without constraining the mapped DCI-based information to specific fields: Instead, the common DCI message formed comprises information for scheduling both primary and secondary component carriers of the primary and secondary cells that is interleaved with each other in accordance with a mapping performed by a trained machine learning model. The interleaving is configured such that respective DCI information for the primary and secondary cells can be extracted using respective machine learnt decoders for the primary and secondary cells. This is discussed in more detailed below.

More specifically, for each component carrier of a cell type, there is provided a machine learning-based decoder that is configured to behave as a dictionary to lookup mapping information for the component carrier based on a combination of the received common DCI and preconfigured information specific for that component carrier.

Machine learning is utilised as, although a DCI message is relatively short, it is difficult to both create (and later share with a UE) a dictionary with a size of $2^k$, where $k$ represents the payload length for a DCI message. Further, the PCell DCI message generated might not be a one-to-one mapping to the SCell's DCI message. In such a case, more features, such as the past DCI messages and measurement of activation ratio of each control, may be used for decoding a received DCI. As a result, to learn the features that contain various types of data (e.g., floating, binary, truncated value, complex numbers etc..), machine learning-based encoding and decoding methods are useful for tackling the mapping from PCC DCI message to SCC DCI messages.

For example, utilising the example shown in Figure 4, there are provided three SCCs, with each SCC having an optimal and/or suboptimal DCI to be transmitted to maximize the Key Performance Indicators (KPIs), such as the user throughput and/or spectral efficiency of a component carrier. A decoder can be equipped at each of the sub-carrier component to individually decode the common information that is transmitted from the primary component carrier (PCC). The inputs for each decoder can be the common information that the PCC has transmitted and the local features for the cell. The local information may comprise, for example, at least one of: past DCI messages, channel status at the current transmission time interval (TTI), or buffer status at the current TTI.

By learning a decoder, an injective function is expected to be learned. This results in, for any DCI message generated from the PCC, the decoder for a SCC can always find the one-to-one mapping from the PCC's DCI message.

In more detail, when the set of possible DCIs from a PCC is $X$, given n data samples $d_n$, $d_1$, $d_2 \in X$ that have $d_1 \neq d_2$ (where $d_n$ represents a data sample), and $c_1 = [d_1, \xi_1]$, $c_2 = [d_2, \xi_2]$ as the concatenated sequence of features $\xi$ and data samples of DCI messages, the decoder is expected to learn a function to return a component carrier-specific DCI message, $s_n$, that results in $s_1 \neq f(c_2)$ with $s_1 = f(c_1)$ and $s_2 = f(c_2)$. Stated differently, the decoder learns a function that returns the component carrier-specific DCI message for a specific component carrier for a set of DCI samples and predetermined features (the "local" features discussed below) corresponding to that specific component carrier.

Due to the uncertainty and randomness of occasions of DCI generations, the DCI messages from PCC to SCC might be one-to-many. In other words, given $d_1^t, d_2^t \in X$ with $d_1^t = d_2^t$ at the $t$-th TTI, the corresponding DCI message for SCC might be $s_1^t \neq s_2^t$. Moreover, the neural decoder might be lossy and introduce some errors when recovering the DCI for SCC. To overcome the issue with recovery errors, the following proposes to send the common DCI message only when the decoder configured at the radio access network node can successfully map the common DCI message to the DCI for PCC or SCC without any error.

To assist in providing the machine learning model, there is described a deep learning-based decoder that may be used for each SCC to achieve multi-carrier scheduling without introducing further modification to the DCI format. Further, by introducing the deep learning-based decoder at the access network node, the access network node can intentionally choose whether to send a common DCI message or an individual DCI message for SCC. The access network node may provide parameters for configuring the learnt decoders to the terminal that will receive the common DCI message.

The following provides an example illustrating how the presently described techniques may be implemented.

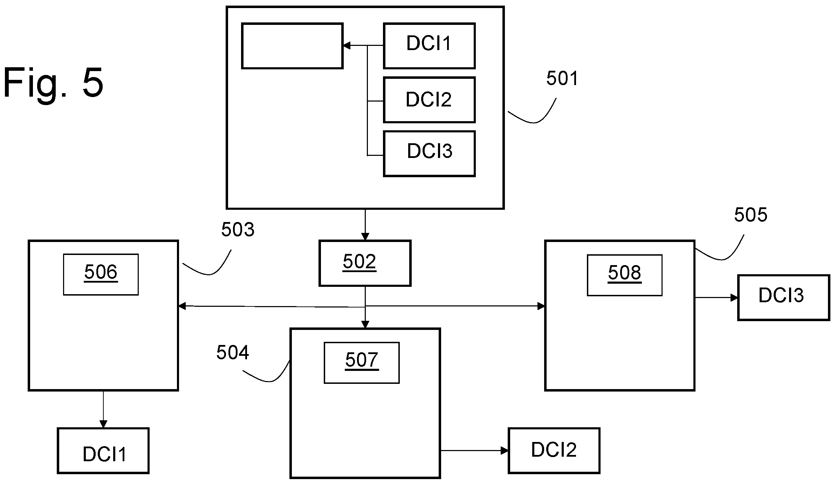

Figures 5 to 7 illustrate example features of the presently described framework.

Figure 5 illustrates a transmitter 501 configured to communicate over a channel 502 to a first receiver 503 of a first SCC, a second receiver 504 of a second SCC, and a third receiver 505 of a third SCC.

The transmitter 501 is configured to determine a common DCI using an input of respective DCI for each of the first SCC, second SCC, and third SCC (e.g., using an input of a first DCI, a second DCI, and a third DCI). The transmitter is configured to map the determined common DCI onto a plurality of resources that are transmitted over a common channel to the first to third receivers 503-505. Each of the receivers 503-505 comprise respective decoders 506 to 508. For example, the first receiver 503 comprises a first decoder 506, the second receiver 504 comprises a second decoder 507, and the third receiver 505 comprises a third decoder 508. The first decoder 506 is configured to receive the common DCI as an input and to output the first DCI. The second decoder 507 is configured to receive the common DCI as an input and to output the second DCI. The third decoder 508 is configured to receive the common DCI as an input, and to output the third DCI.

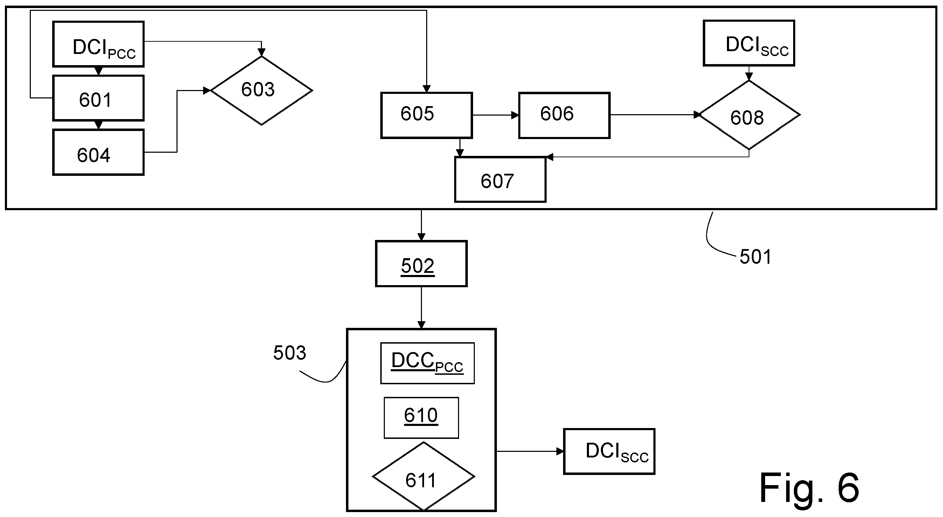

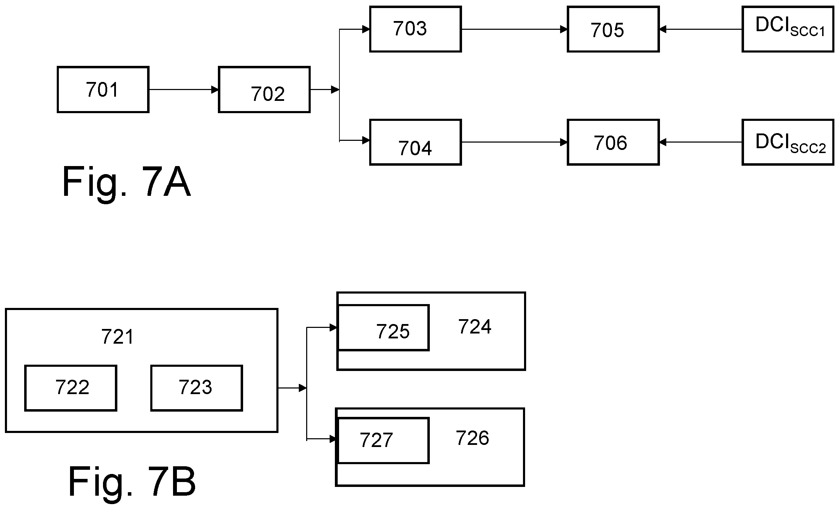

Example potential features of the system of Figure 5 are illustrated with respect to Figures 6 and 7.

Figure 6 illustrates example internal operations of the transmitter 501 and the first receiver 503. It is understood that the operations performed by the first receiver 503 in this example may be analogously performed by any of the second and/or third receivers 504-505, where the first DCI and the first decoder 506 are respectively replaced by the second DCI and the second decoder 507 and/or by the third DCI and the third decoder 508.

In Figure 6, the transmitter 501 comprises a first encoder 601. The first encoder may be configured to perform an encoding for a PCC channel. Each of the first encoder 601 is configured to receive a DCI for the PCC as an input. The PCC DCI is also configured to be provided to a first correlator 603. The first encoder 601 is configured to output an encoded version of the PCC DCI to a first decoder 604. The first decoder 604 decodes the encoded version of the PCC DCI using predetermined "local" features for the PCC, and outputs the result to the first correlator 603. The first correlator 603 determines whether there is a match between the output of the first decoder 604 and the PCC DCI input. When the first correlator 603 determines that there is no match, the first correlator causes the previous defined individual transmissions to be performed for each of the first to third receivers (e.g., no common DCI is formed). When the first correlator 603 determines that there is a match, the first correlator causes a common DCI mechanism to be used. This is represented by the actions of the features from 605. The common DCI output by the first encoder 601 is provided at 605.

The common DCI output at 605 is provided to a second decoder 606 and to a mapping algorithm 607 for mapping the common DCI to transmission resources. The second decoder 606 is configured to decode the common DCI using predetermined "local" features for the SCC, and output the decoded common DCI to a second correlator 608. The second correlator 608 is also configured to receive a DCI that is specific for the first SCC. The second correlator 608 is configured to determine whether there is a match between the decoded common DCI and the first SCC DCI. When the second correlator 608 determines that there is no match, the second correlator causes the previous defined individual transmissions to be performed for each of the first to third receivers (e.g., no common DCI is used for transmitting the DCI for the first SCC). When the second correlator 608 determines that there is a match, the second correlator triggers the mapping algorithm 607 to be activated to trigger the mapping of the common DCI to transmission resources.

Assuming the common DCI is to be used for conveying DCI information for the first SCC, the common DCI is transmitted over channel 502 using the resources determined by the mapping algorithm 607.

The first receiver 503 receives the common DCI over the channel 502. The first receiver 503 causes the common DCI to be input to a third decoder 610 and to a cyclic redundancy check function 611. The third decoder 610 decodes the received common DCI and outputs the result to the cyclic redundancy check function 611. The cyclic redundancy check function uses these inputs to determine whether the common DCI has been successfully received. When the cyclic redundancy check function 611 determines that the common DCI has been successfully received, the method causes the first SCC DCI to be used.

In this example of Figure 6, a source DCI generated for PCC is first encoded to a shorter message using a first encoder 601. The first encoder 601 may be a lossless compressor. A lossless compressor guarantees that the decoded sequence is error-free. Alternatively, the first encoder 601 may be a lossy encoder. A lossy encoder encodes the PCC DCI message into a certain length. The first encoder's output is a binary sequence. The first correlator checks whether the encoded DCI message can be successfully decoded by comparing a decoded version of the encoded PCC DCI message to the original (pre-encoded) PCC DCI.

The binary sequence output by the first encoder 601 may be considered as the common DCI to be decoded by each SCC (e.g., by each receiver in the present example). In more detail, for each SCC, there are features that are both known by the transmitter and the receiver. These features may comprise, for example, at least one of past DCI messages, buffer status, or channel quality status.

During a training phase of the machine learning model, the decoder takes the SCC features and binary output from the encoder to learn to decode the DCI message that is originally generated for SCC. If the decoder can successfully decode the common DCI, that means the UE will also be able to decode the common DCI if the common DCI is successfully received. If there is a decoding error at the BTS for decoding DCI for SCC 1. The BTS can choose to individually transmit the original DCI for SCC 1 without the common information.

The first to second decoders may be trained and tested. This is illustrated with respect to Figures 7A and 7B.

Figure 7A illustrates a training phase.

Figure 7A illustrates that a PCC DCI 701 is input to a lossless encoder 702. The lossless encoder 702 encodes the PCC DCI 701 and outputs the resulting encoded PCC DCI to a first decoder 703 and a second decoder 704. The first decoder decodes the encoded PCC DCI input to output a decoded PCC DCI to a first cross-entropy loss function 705. The first cross-entropy loss function 705 also receives the DCI for SCC1. The second decoder 704 decodes the encoded PCC DCI input to output a decoded PCC DCI to a second cross-entropy loss function 706. The second cross-entropy loss function 706 receives the DCI for SCC2.

The cross-entropy loss functions may determine the cross-entropy loss using:

$$CE(s_1, \hat{s}_1) = s_1 \log \hat{s}_1 + (1 - s_1) \log(1 - \hat{s}_1)$$

to train the neural decoder. Once the decoder has been fully tuned, the decoder models are shared to both the transmitter and the receiving terminal(s).

The training phase implemented by the apparatus of Figure 7A may be performed as follows.

During a first step, the PCell starts to initiate the training for encoder and decoder. This includes the selection for neural network models.

During a second step, the PCell and any SCell(s) generate original DCIs as training samples. In the following, $d_i \in X$ is used to denote a sample for the PCell and

$$s_i^j \in \mathcal{S}$$

is used to denote a sample for the j-th SCell.

During a third step, the generated PCell DCI is passed to the neural encoder to generate common information, $c_i = f(d_i)$, where $c_i \in \mathbb{F}_2^N$ is a binary sequence, where N corresponds to a number of bits, and $\mathbb{F}_2$ corresponds to a binary field with {0 and 1}.

During a fourth step, data samples $d_i$ are provided to a decoder to recover the PCell DCI message, $\hat{d}_i = f_p(c_i)$.

During a fifth step, for each SCell, the common information is decoded using additional local features for the SCC. As discussed above, the These features may comprise, for example, at least one of past DCI messages, buffer status, or channel quality status for the SCC being considered. In the following, $\hat{s}_i^j = f_j(c_i)$, for $j \in \{1, 2, ..., M\}$ is used to denote the decoded DCI message for the $j$-th SCell, where $M$ represents the number of SCCs that the system has.

During a sixth step, the apparatus generates a multi-loss function. This may be different based on whether the encoded is a lossy encoder or a lossless encoder.

When a lossy encoder is used for the encoding of the PCC DCI message: $l =$

$$CE(\hat{d}_i, d_i) + \sum_{j=1}^{M} CE(\hat{s}_i^j, s_i^j)$$

When a lossless encoder is used for the encoding of the PCC DCI message:

$$l = \sum_{j=1}^{M} CE(\hat{s}_i^j, s_i^j).$$

During a seventh step, the gradients from the multi-loss function are backpropagated, and the encoder and decoder's parameters are tuned.

Following the seventh step, the procedure returns to the second step, with another batch of samples being generated until a predetermined set of training criteria are satisfied.

Figure 7B illustrates how the trained model may be tested. Figure 7B illustrates an access network node 721 comprising a first SCC1 decoder 722 and a second SCC2 decoder 723. Figure 7B further shows a first SCC1 724 comprising a second SCC1 decoder 725, and a second SCC2 726 comprising a second SCC2 decoder 727.

In the example environment of Figure 7B, the trained models to the UEs that are compatible with the CA setup.

For each transmission time interval (TTI), the BTS encodes the PCell's DCI to a common information and decodes it to match the original SCell's DCIs.

When the encoded PCC DCI message cannot be decoded to $d_i$, the system follows traditional separate transmissions.

When the decoder's output, $\hat{s}_i^j$, perfectly matches to the original DCI $s_i^j$ (bit error is 0), $s_i^j$ is not required to be transmitted. Otherwise, $s_i^j$ is transmitted separately from the common information.

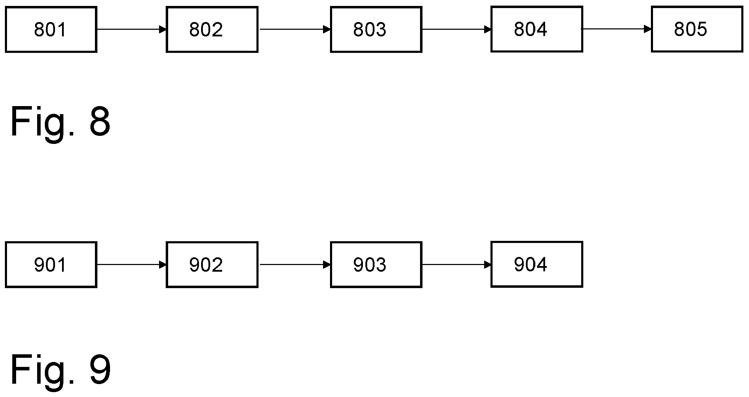

Example operations that may be performed by at least one of the apparatus described above are described below with reference to Figures 8 and 9. It is therefore understood that the above provided examples may provide further context for the presently described features. It is further understood that the above examples are merely illustrative, in a non-limiting way of how the following described operations may be implemented.

Figure 8 illustrates operations that may be performed by an apparatus of a terminal (e.g., by an apparatus of a user equipment). The terminal may be as described in reference to Figure 3.

During 801, the apparatus receives information for configuring a first machine learning model from a network node. The information may comprise, for example, at least one parameter for enabling the first machine learning model to be configured to decode received downlink control information, DCI, message(s) to obtain decoded primary cell DCI message(s).

During 802, the apparatus receives information for configuring a second machine learning model from the network node. This information may comprise, for example, at least one parameter for enabling the second machine learning model to be configured to decode received DCI message(s) to obtain decoded secondary cell DCI message(s).

During 803, the apparatus receives a common DCI message/ The common DCI message may alternatively be labelled as a "first DCI message". The common DCI message is a DCI message that is used for determining both a primary cell DCI message and at least one secondary cell message. ;

During 804, the apparatus uses the first machine learning model to obtain a decoded primary cell DCI message by inputting the common DCI message into the first machine learning model. Stated differently, the common DCI message is used as an input to the first machine learning model, which processes the common DCI message input to output a decoded primary cell DCI message (e.g., a primary cell DCI message that is specific for the primary cell). The primary cell DCI message comprises scheduling information (e.g., resource allocation) for the primary cell. The apparatus may use the scheduling information (e.g., resource allocation) for communicating on the primary cell in accordance with the scheduling information.

During 805, the apparatus uses the second machine learning model to obtain a decoded secondary cell DCI message by inputting the common DCI message into the second machine learning model. Stated differently, the common DCI message is used as an input to the second machine learning model, which processes the common DCI message input to output a decoded secondary cell DCI message (e.g., a secondary cell DCI message that is specific for the secondary cell). The secondary cell DCI message comprises scheduling information (e.g., resource allocation) for the secondary cell. The apparatus may use the scheduling information (e.g., resource allocation) for communicating on the secondary cell in accordance with the scheduling information.

During 804, the apparatus may use additional information as an input for processing the common DCI message to form the decoded primary cell DCI message. This additional information may comprise values for a plurality of metrics characteristic of the primary cell. For example, the apparatus may use at least one predetermined first set of information with the common DCI message to decode the common DCI message to form the decoded primary cell DCI, wherein the at least one predetermined first set of information comprises at least one of: a previously transmitted DCI message of the primary cell, a channel status at a current transmission time interval of the primary cell, or a buffer status at a current transmission time interval of the primary cell. The previously transmitted DCI message of the primary cell may comprise values indicative of the terminal's characteristics on the primary cell, including, for example, mobility and radio resource control states of the terminal. Further to this, the apparatus may receive an indication identifying the at least one predetermined first set of information.

During 805, the apparatus may use additional information as an input for processing the common DCI message to form the decoded secondary cell DCI message. This additional information may comprise values for a plurality of metrics characteristic of the secondary cell. For example, the apparatus may use at least one predetermined second set of information with the common DCI message to decode the common DCI message to form the decoded secondary cell DCI, wherein the at least one predetermined second set of information comprises at least one of: a previously transmitted DCI message of the secondary cell, a channel status at a current transmission time interval of the secondary cell, or a buffer status at a current transmission time interval of the secondary cell. The previously transmitted DCI message of the secondary cell may comprise values indicative of the terminal's characteristics on the secondary cell, including, for example, mobility and radio resource control states of the terminal. Further to this, the apparatus may receive an indication identifying the at least one predetermined second set of information.

The common DCI message may be received using a primary component carrier of the primary cell.

The apparatus of the terminal may be able to determine that the received DCI message is common to both the first and second machine learning models by examining the results of a cyclic redundancy check performed on the output decoded primary cell DCI message and decoded secondary cell DCI message (e.g., when the cyclic redundancy check passes for a specific cell-type, it can be determined that the decided DCI message is valid for that cell type). The apparatus may thus determine that the decoded primary cell DCI message has passed a cyclic redundancy check; and/or determine that the decoded secondary cell DCI message has passed a cyclic redundancy check.

It is understood that although Figure 8 is described with reference to a single secondary cell (e.g., to a second machine learning model), that this may be expanded for systems that comprise a plurality of secondary cells, such as illustrated above in reference to Figure 4. In such a case, in addition to the above described second machine learning model in respect of a secondary cell, there may be provided a third machine learning model in respect of a third cell, and so on.

Figure 9 illustrates operations that may be performed by an apparatus for a network node. The network node may correspond to the network node of Figure 8. The apparatus may correspond to the control apparatus of Figure 2.

During 901, the apparatus transmits information for configuring a first machine learning model to a terminal, the first machine learning model being configured to decode received downlink control information, DCI, message(s) to obtain decoded primary cell DCI message(s). The terminal may correspond to the terminal of Figure 8. This transmission may correspond to the reception of 801.

During 902, the apparatus transmits information for configuring a second machine learning model to the terminal, the second machine learning model being configured to decode received DCI message(s) to obtain decoded secondary cell DCI message(s). This transmission may correspond to the reception of 802.

During 903, the apparatus determines whether to transmit a common DCI message that is common for both a secondary cell and a primary cell based on the first and second machine learning models.

During 904, the apparatus transmits a DCI message based on the determining. Stated differently, the apparatus transmits the common DCI message when it is determined that a common DCI message can be formed, and transmits respective DCI messages for each of the primary and secondary cells when it is determined that the a common DCI message cannot be formed.

The determining whether to transmit the common DCI message may comprise evaluating a proposed common DCI message (referred to hereunder as simply the common DCI message) to determine whether it can be successfully decoded by the machine learning models configured at both the terminal and the network node.

For example, with respect to the primary cell, the apparatus may: encode a primary cell DCI message using a primary component carrier encoder to form the common DCI message; decode the common DCI message using the first machine learning model to obtain a first decoded DCI message; and determine whether the first decoded DCI message and the primary cell DCI message are identical. With respect to the secondary cell, the apparatus may encode the primary cell DCI message using the primary component carrier encoder to form the common DCI message, decode the common DCI message using the second machine learning model to obtain a second decoded DCI message, and determine whether the second decoded DCI message is identical to a secondary cell DCI message. Subsequent to these evaluations, the transmitted DCI message of 804 may comprise the common DCI message that is common for primary and secondary cells when it is determined that the first decoded DCI message and the primary cell DCI message are identical, and that the second decoded DCI message and the secondary cell DCI message are identical.

In contrast, the transmitting the DCI message of 904 comprises transmitting the common DCI message and another DCI message, wherein the common DCI message is transmitted as a primary cell DCI message and the another DCI message is transmitted as a secondary cell DCI message, when it is determined that at least one of the first decoded DCI message and the primary cell DCI message are not identical, or that the second decoded DCI message and the secondary cell DCI message are not identical.

The encoder for forming the common DCI message may be operated using a machine learning model, as described further above. For example, an encoder may be trained (using, for example historical information such as past DCI messages, a respective buffer status of the different cells, a respective channel status of the different cells, etc.) in order to identify a mapping algorithm for encoding DCI information for at least a secondary cell and a primary cell within a same (common) DCI message. The encoder may be trained by identifying patterns in which information is typically (e.g., more than a threshold amount) common for the multiple cell type, and so may be used for multiple cells. The type of information classed as "common" to multiple cells and the type of information classed as separate may therefore be dynamically set based on the current network configuration. Further, the mapping algorithm used may map both common and individual DCI information for the different cells types into a single field. DCI information that is specific for a primary cell may be extracted from the single field using primary cell-specific parameter values (such as described below in relation to "additional information" for forming the first decoded DCI message). Further, DCI information that is specific for a secondary cell may be extracted from the single field using secondary cell-specific parameter values (such as described below in relation to "additional information" for forming the second decoded DCI message).

The apparatus may use additional information as an input for processing the common DCI message to form the first decoded DCI message. This additional information may comprise values for a plurality of metrics characteristic of the primary cell. For example, the apparatus may use at least one predetermined first set of information with the common DCI message to decode the common DCI message to form the first decoded DCI message, wherein the at least one predetermined first set of information comprises at least one of: a previously transmitted DCI message of the primary cell, a channel status at a current transmission time interval of the primary cell, or a buffer status at a current transmission time interval of the primary cell. The previously transmitted DCI message of the primary cell may comprise values indicative of the terminal's characteristics on the primary cell, including, for example, mobility and radio resource control states of the terminal. Further to this, the apparatus may transmit an indication, to the terminal, identifying the at least one predetermined first set of information.

The apparatus may use additional information as an input for processing the common DCI message to form the second decoded DCI message. This additional information may comprise values for a plurality of metrics characteristic of the secondary cell. For example, the apparatus may use at least one predetermined second set of information with the common DCI message to decode the common DCI message to form the second decoded DCI message, wherein the at least one predetermined second set of information comprises at least one of: a previously transmitted DCI message of the secondary cell, a channel status at a current transmission time interval of the secondary cell, or a buffer status at a current transmission time interval of the secondary cell. The previously transmitted DCI message of the secondary cell may comprise values indicative of the terminal's characteristics on the secondary cell, including, for example, mobility and radio resource control states of the terminal. Further to this, the apparatus may transmit an indication identifying the at least one predetermined second set of information.

The common DCI message may be received using a primary component carrier of the primary cell.

The apparatus of the network node may train the first and second machine learning models.

In any (e.g. all) of the examples of Figures 8 and 9, the first machine learning model or the second machine learning model may be an injective function.

In any (e.g. all) of the examples of Figures 8 and 9, the first machine learning model or the second machine learning model may be a neural network decoder. A neural network refers to the math model, where interconnected nodes form separated layers. The neural network decoder represents the model used to decompress features from a lower dimension into original (unencoded) data using the artificial neurons. It is understood that a deep learning model may be used to achieve the encoding or decoding task for DCI messages. The neural network model may comprise any suitable form (e.g., at least one of: deep neural network, convolutional neural network, or recurrent neural network, etc.).

The proposed framework provides a machine learning-based solution to explore the correlation between the DCI messages from the PCell and SCell. The encoder and the set of decoders for the SCC creates an injective (e.g., one-to-one) function that maps the original DCI from the PCell to the DCI from the SCell. The proposed method does not need any preset type for the DCI fields. Additionally, the stronger the correlations of the DCI messages, the better of the decoder's performance and the larger of the performance gain on the reduction of the transmission overhead.

The presently described machine learning method may be useful as the machine learning can learn an underlying correlation structure for a common DCI based on the results of previously obtained information. Such methods are especially useful for apparatus supporting low-latency and massive connectivity.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(c) a combination of analog and/or digital hardware circuit(s) with software/firmware and

(d) any portions of hardware processor(s) with software (including digital signal processor(s)), software, and memory(ies) that work together to cause an apparatus, such as a mobile phone or server, to perform various functions) and

(e) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal ) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

**Claims**

1. An apparatus for a terminal, the apparatus comprising means for performing:

   receiving information for configuring a first machine learning model from a network node, the first machine learning model being configured to decode received downlink control information, DCI, message(s) to obtain decoded primary cell DCI message(s);
   receiving information for configuring a second machine learning model from the network node, the second machine learning model being configured to decode received DCI message(s) to obtain decoded secondary cell DCI message(s);
   receiving a common DCI message;
   using the first machine learning model to obtain a decoded primary cell DCI message by inputting the common DCI message into the first machine learning model; and
   using the second machine learning model to obtain a decoded secondary cell DCI message by inputting the common DCI message into the second machine learning model.

2. An apparatus as claimed in claim 1, wherein the common DCI message is received using a primary component carrier of the cell, and/or wherein the means for using the first machine learning model comprises means for performing: using at least one predetermined first set of information with the common DCI message to decode the common DCI message to form the decoded primary cell DCI message, wherein the at least one predetermined first set of information comprises at least one of: a previously transmitted DCI message of the primary cell, a channel status at a current transmission time interval of the primary cell, or a buffer status at a current transmission time interval of the primary cell.

3. An apparatus as claimed in claim 2, further comprising means for receiving an indication identifying the at least one predetermined first set of information.

4. An apparatus as claimed in any preceding claim, wherein the means for using the second machine learning model comprises means for performing: using at least one predetermined second set of information with the common DCI message to decode the common DCI message to form the decoded secondary cell DCI message, wherein the at least one predetermined second set of information comprises at least one of: a previously transmitted DCI message of the secondary cell, a channel status at a current transmission time interval of the secondary cell, or a buffer status at a current transmission time interval of the secondary cell.

5. An apparatus as claimed in claim 4, further comprising means for receiving an indication identifying the at least one predetermined secondary set of information.

6. An apparatus as claimed in any preceding claim, further comprising means for performing:

   determining that the decoded primary cell DCI message has passed a cyclic redundancy check; and/or
   determining that the decoded secondary cell DCI message has passed a cyclic redundancy check.

7. An apparatus for a network node, the apparatus comprising means for performing:

   transmitting information for configuring a first machine learning model to a terminal, the first machine learning model being configured to decode received downlink control information, DCI, message(s) to obtain decoded primary cell DCI message(s);
   transmitting information for configuring a second machine learning model to the terminal, the second machine learning model being configured to decode received DCI message(s) to obtain decoded secondary cell DCI message(s);
   determining whether to transmit a common DCI message that is common for both a secondary cell and a primary cell based on the first and second machine learning models; and
   transmitting a DCI message based on the determining.

8. An apparatus as claimed as claim 7, wherein the determining whether to transmit the common DCI message comprises means for:

   encoding a primary cell DCI message using a primary component carrier encoder to form the common DCI message;

decoding the common DCI message using the first machine learning model to obtain a first decoded DCI message; and

determining whether the first decoded DCI message and the primary cell DCI message are identical; and

encoding the primary cell DCI message using the primary component carrier encoder to form the common DCI message;

decoding the common DCI message using the second machine learning model to obtain a second decoded DCI message; and

determining whether the second decoded DCI message is identical to a secondary cell DCI message;

wherein the transmitted DCI message comprises the common DCI message that is common for primary and secondary cells when it is determined that the first decoded DCI message and the primary cell DCI message are identical, and that the second decoded DCI message and the secondary cell DCI message are identical.

9. An apparatus as claimed in claim 8, wherein the means for using the first machine learning model comprises means for performing: using at least one predetermined first set of information with the common DCI message to decode the common DCI message to form the first decoded DCI message, wherein the at least one predetermined first set of information comprises at least one of: a previously transmitted DCI message of the primary cell, a channel status at a current transmission time interval of the primary cell, or a buffer status at a current transmission time interval of the primary cell, wherein the apparatus further comprises means for receiving an indication identifying the at least one predetermined first set of information.

10. An apparatus as claimed in any of claims 9 to 11, wherein the means for using the second machine learning model comprises means for performing: using at least one predetermined second set of information with the common DCI message to decode the common DCI message to form the second decoded DCI message, wherein the at least one predetermined second set of information comprises at least one of: a previously transmitted DCI message of the secondary cell, a channel status at a current transmission time interval of the secondary cell, or a buffer status at a current transmission time interval of the secondary cell.

11. An apparatus as claimed in claim 10, further comprising means for receiving an indication identifying the at least one predetermined secondary set of information.

12. An apparatus as claimed in any of claims 7 to 11, wherein the means for transmitting the DCI message comprises means for transmitting the common DCI message and another DCI message, wherein the common DCI message is transmitted as a primary cell DCI message and the another DCI message is transmitted as a secondary cell DCI message when it is determined that at least one of the first decoded DCI message and the primary cell DCI message are not identical, or that the second decoded DCI message and the secondary cell DCI message are not identical.

13. An apparatus as claimed in any of claims 7 to 12, further comprising means for training the first and second machine learning models.

14. An apparatus as claimed in any preceding claim, wherein at least one of the first machine learning model or the second machine learning model is an injective function, and/or

wherein at least one of the first machine learning model or the second machine learning model is a neural network decoder.

15. A method for a terminal, the method comprising:

receiving information for configuring a first machine learning model from a network node, the first machine learning model being configured to decode received downlink control information, DCI, message(s) to obtain decoded primary cell DCI message(s);

receiving information for configuring a second machine learning model from the network node, the second machine learning model being configured to decode received DCI message(s) to obtain decoded secondary cell DCI message(s);

receiving a common DCI message;

using the first machine learning model to obtain a decoded primary cell DCI message by inputting the common DCI message into the first machine learning model; and

using the second machine learning model to obtain a decoded secondary cell DCI message by inputting the common DCI message into the second machine learning model.

Fig. 1

Fig. 2

EP 4 600 865 A1

Fig. 3

Fig. 4

Fig. 5

EP 4 600 865 A1

Fig. 6

703 → 705 ← DCI$_{SCC1}$

701 → 702 → 703 / 704

704 → 706 ← DCI$_{SCC2}$

**Fig. 7A**

721
722    723

725    724

727    726

**Fig. 7B**

| 801 | → | 802 | → | 803 | → | 804 | → | 805 |

Fig. 8

| 901 | → | 902 | → | 903 | → | 904 |

Fig. 9

Europäisches
Patentamt

European
Patent Office

Office européen
des brevets

**EUROPEAN SEARCH REPORT**

Application Number

EP 24 15 6780

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2023/009271 A1 (QUALCOMM INC [US]) 2 February 2023 (2023-02-02) * abstract * * page 21, paragraph 77 - page 29, paragraph 105 * ----- | 1-15 | INV. G06N3/00 H04L1/00 H04L5/00 |
| A | US 2022/286927 A1 (MADADI PRANAV [US] ET AL) 8 September 2022 (2022-09-08) * abstract * * page 1, paragraph 6 - page 2, paragraph 21 * ----- | 1-15 | |

TECHNICAL FIELDS
SEARCHED (IPC)

H04L
G06N

The present search report has been drawn up for all claims

| Place of search | Date of completion of the search | Examiner |
|---|---|---|
| Munich | 26 June 2024 | Toumpoulidis, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 15 6780

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2024

| Patent document cited in search report | | Publication date | Patent family member(s) | | Publication date |
|---|---|---|---|---|---|
| WO 2023009271 | A1 | 02-02-2023 | EP | 4378222 A1 | 05-06-2024 |
| | | | US | 2023038444 A1 | 09-02-2023 |
| | | | WO | 2023009271 A1 | 02-02-2023 |
| US 2022286927 | A1 | 08-09-2022 | CN | 116965097 A | 27-10-2023 |
| | | | EP | 4289178 A1 | 13-12-2023 |
| | | | US | 2022286927 A1 | 08-09-2022 |
| | | | WO | 2022191493 A1 | 15-09-2022 |

EPO FORM P0459

For more details about this annex : see Official Journal of the European Patent Office, No. 12/82